# FASCICULE DE BREVET EUROPEEN

(11) **EP 2 922 287 B1**
(45) Date de publication et mention de la délivrance du brevet: **19.06.2019**
(21) Numéro de dépôt: 14195794.4
(22) Date de dépôt: 02.12.2014
(51) Int. Cl.: H04N 5/225, B25J 19/02

(54) **Dispositif de caméra portative et de bras de télémanipulateur**
Vorrichtung mit einer tragbaren Kamera und einer Greifzange eines Roboters
Device including a portable camera and a telemanipulating arm

(30) Priorité: 19.03.2014 FR 1452290
(43) Date de publication de la demande: 23.09.2015
(73) Titulaire: Commissariat à l'Énergie Atomique et aux Énergies Alternatives, 75015 Paris (FR)
(72) Inventeur: Gobin, François, 84100 ORANGE (FR); Gennisson, Mickaël, 30650 ROCHEFORT DU GARD (FR); Brenneis, Christophe, 30290 SAINT VICTOR LA COSTE (FR)
(74) Mandataire: Brevalex

(56) Documents cités:
- FR-A1- 2 883 147
- JP-A- 2007 288 010
- US-A1- 2005 234 435
- US-A1- 2008 056 808
- US-A1- 2010 158 656
- US-A1- 2014 055 597

## Description

Le sujet de cette invention est un dispositif de bras télémanipulateur et de caméra portative à fixer au bras télémanipulateur.

Dans des activités de télémanipulation, les opérateurs observent la scène sur laquelle ils travaillent à travers des hublots traversant la paroi de protection à côté des traversées de cette même paroi par les télémanipulateurs qu'ils actionnent. Certains endroits excentrés des cellules, ou des endroits cachés par un objet situé à l'intérieur, sont cependant inaccessibles à cette vision directe. On a donc équipé les cellules d'aides à la vision, comme des périscopes ou des caméras. Les périscopes ont souvent les inconvénients d'être encombrants et de n'offrir qu'une vision supplémentaire limitée à une partie du contenu de la cellule, puisque leur emplacement est fixe ; c'est pourquoi les caméras sont de très bons outils complémentaires, puisqu'elles sont des équipements peu coûteux, portatifs et légers, et donc susceptibles d'être déplacés à n'importe quel endroit, et qu'elles peuvent aussi être orientées dans toutes les directions à l'intérieur des cellules, permettant une couverture visuelle quasi totale du volume de l'enceinte blindée à l'intérieur de laquelle elles se trouvent.

Plusieurs techniques exploitant de telles caméras ont été proposées. Dans l'une d'entre elles, la caméra reste au bout d'un support mobile comprenant un pied posé sur une surface de la cellule, et une tige flexible s'élevant au milieu du pied et sur laquelle la caméra est fixée. Le pied est posé près de la scène souhaitée, et la caméra est mise à la bonne orientation en déformant la tige. Ce dispositif est commode, mais présente l'inconvénient que la mise au point de la caméra doit être refaite avant chaque opération, le support étant à des distances variables de la scène à observer.

FR 2 883 147 A et US 2008/0056808 A décrivent des supports flexibles d'objets qui possèdent une grande facilité de réglage de position, mais qui ne sont guère envisageables dans le domaine envisagé ici, à cause de leur faible rigidité et de la difficulté à les régler avec précision autrement que de façon manuelle.

Les caméras peuvent aussi être portées par les télémanipulateurs eux-mêmes. On utilise alors deux bras de télémanipulation, dont la pince de l'un tient la caméra, alors que la pince de l'autre effectue le travail observé. Cette conception a donc l'inconvénient d'occuper un second bras de télémanipulation.

Enfin, certaines conceptions utilisent une caméra montée à demeure sur un bras de télémanipulation, ou un bras de robot autonome, afin d'éviter l'inconvénient de la conception précédente. US 2010/0158656 A et JP 2007-288010 A divulguent de tels dispositifs, où la caméra est montée sur le bras par un support fixe, ou démontable seulement manuellement; mais le bras porteur de la caméra doit alors être extrait de la cellule quand la caméra doit être remplacée, ce qui impose des précautions et un travail fastidieux pour être accompli selon les règles de sécurité. Et US 2014/005597 A divulgue un dispositif où la caméra est montée sur un tel support par une liaison qui permet de la remplacer facilement par télémanipulation, ce qui est avantageux et correspond à un but de l'invention présente ; mais le support doit rester sur le bras, de sorte que les inconvénients des dispositifs précédents subsistent si le support doit être changé lui aussi, ou réglé d'une autre façon.

L'invention concerne un dispositif de bras télémanipulateur et de caméra portative permettant d'éviter les inconvénients qui précèdent, en particulier la nécessité de refaire la mise au point à chaque opération ou l'occupation d'un second bras télémanipulateur, et qui peut être démonté librement de la pince avec tout son support puis remonté facilement sur elle en cas de besoin, tout en assurant une bonne position à la caméra.

Le dispositif proposé ici, à caméra portative associée à un bras de télémanipulateur, comprend une caméra et un support de la caméra ; le support et le bras comprennent des moyens complémentaires de liaison, consistant en des moyens d'emboîtement et des moyens de frein. Les moyens d'emboîtement permettent donc d'assembler le dispositif au bras par un mouvement simple, donc sans aucune difficulté, et les moyens de frein permettent de bloquer le dispositif à une position d'assemblage, tout en permettant cependant de le retirer sans difficulté et sans effort important par un mouvement inverse du mouvement d'assemblage.

Les moyens d'emboîtement et de frein comprennent d'abord un ressort en forme de pince, qui permet de fixer la caméra sur le bras télémanipulateur, par exemple à un raccord étanche, reliant en général le poignet à la pince et de forme circulaire régulière, par une simple opération d'agrafage, en poussant le ressort contre le bras, jusqu'à forcer son ouverture. Le ressort comprend deux branches arquées, ayant des concavités dirigées l'une vers l'autre, des extrémités libres divergeant en formant un angle, et une entretoise disposée entre les branches. Quand le ressort est installé autour du bras, il se referme sur lui en revenant à sa forme initiale, et la caméra est maintenue fermement. Le dispositif peut être enlevé de la même façon en exerçant un effort opposé. On peut utiliser un deuxième bras de télémanipulateur pour cela. Le deuxième télémanipulateur sera toutefois incapable de placer le support de la caméra à une position très précise sur le bras, malgré la facilité de connexion et de déconnexion offerte par le ressort. Les moyens d'emboîtement et de frein sont donc complétés soit par un appui d'une face du support opposée à la caméra sur une face du bras, soit par un usinage cylindrique et une tige logée dans ledit usinage, l'usinage et la tige étant répartis sur le support et le bras, afin d'assurer dans les deux cas au support une position angulaire déterminée sur la section circulaire du bras, même s'il est mal placé au départ par le deuxième bras.

Dans une forme particulière de réalisation, le support comprend une partie fixe à laquelle sont fixés le ressort et une partie mobile, reliée à la partie fixe par une articulation et un frein, à laquelle est fixée la caméra. L'orientation de la caméra par rapport au bras peut alors être modifiée à volonté.

Pour transmettre leurs images, les caméras sont normalement munies d'un fil de transmission. Dans l'invention, la caméra pourra être munie d'une longueur modérée de fil, terminée par un raccord, et la connexion se fera à un fil de plus grande longueur, à demeure dans la cellule et muni d'un raccord complémentaire, ou un fil situé dans le bras de télémanipulateur lui-même, le raccord complémentaire étant alors monté sur l'enveloppe du bras.

Le montage est facilité si la face opposée à la caméra comprend une portion plane située devant le ressort dans une direction de visée de la caméra.

Le support peut comprendre une bague d'adaptation à un pied de support en forme de tige, ce qui permet de ranger la caméra quand elle n'est pas montée sur le bras, afin d'en faire un point de vue fixe. Lorsque le système est utilisé dans une enceinte où il est soumis à une forte irradiation, il peut également être rangé dans un coffre métallique qui permet de le protéger du rayonnement lorsqu'il n'est pas utilisé.

Dans d'autres modes de réalisation, les moyens complémentaires de liaison comprennent des rainures aux sections complémentaires, distribuées sur le dispositif et le bras et coulissant l'une dans l'autre. On voit que le mouvement d'assemblage est encore un mouvement de translation. Les moyens de frein peuvent comprendre, dans ce genre de réalisations, un poussoir à bille et une encoche de réception de la bille, distribués sur le dispositif et le bras et procurant une position stable une fois que la bille atteint l'encoche et y pénètre.

L'invention sera maintenant décrite plus complètement, en liaison aux figures suivantes :
- la figure 1 est une vue d'une première réalisation d'une extrémité d'un bras télémanipulateur ;
- la figure 2 est une vue du dispositif;
- la figure 3 est une vue du montage ;
- la figure 4 explicite le montage ;
- la figure 5 est une vue en éclatée du dispositif ;
- les figures 6, 7 et 8 illustrent la connexion électrique de la caméra ;
- la figure 9 est une autre vue du dispositif ;
- les figures 10, 11 et 12 illustrent un autre dispositif et son montage ;
- et les figures 13, 14 et 15 illustrent un autre dispositif et son montage.

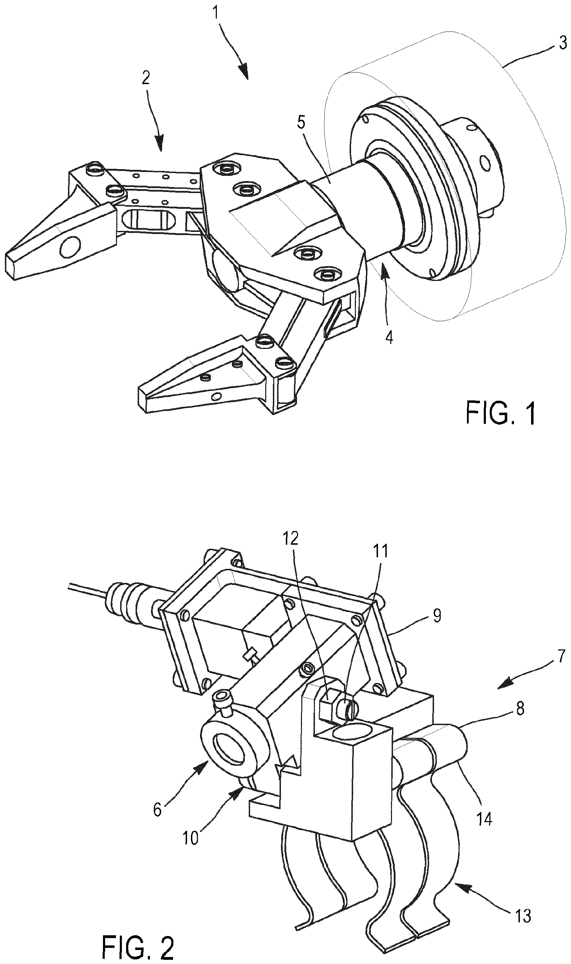

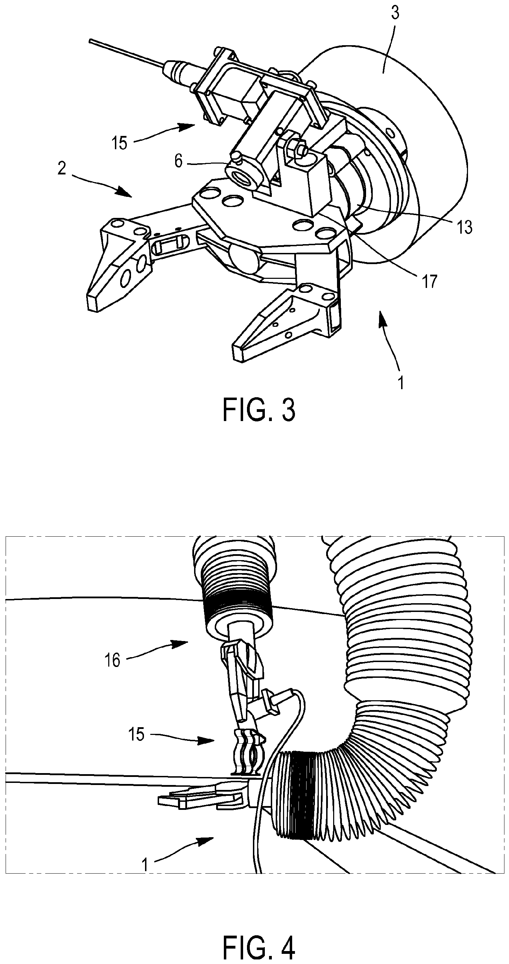

L'invention est destinée à des bras télémanipulateurs de genre répandu et comprenant à leur extrémité un outil tel qu'une pince 2, relié à un segment distal 3 du bras 1, par un poignet 4. Le poignet 4 est ici un raccord conçu pour rester étanche et qui comprend donc un manchon 5 extérieur, parfaitement cylindrique et lisse (figure 1). Le dispositif 15 de l'invention comprend une caméra 6 (figure 2) montée sur un support 7, comprenant une partie fixe 8 et une partie mobile 9. La caméra 6 est assujettie à celle-ci. La partie fixe 8 et la partie mobile 9 sont reliées l'une à l'autre par une articulation 10 munie d'un frein 11, c'est-à-dire d'un mécanisme permettant de bloquer l'articulation 10. La partie fixe 8 comprend un ressort 13, situé sous sa face inférieure 14, opposée à la partie mobile 9 et à la caméra 6. Le dispositif 15 de l'invention peut être monté sur le bras 1 de la façon représentée à la figure 3, le ressort 13 étant disposé autour du manchon 5 et la caméra 6 étant placée juste derrière la pince 2 et légèrement au-dessus d'elle, avec une inclinaison lui permettant d'observer le travail accompli par la pince 2.

La figure 4 illustre le placement du dispositif 15 sur le bras 1, au moyen d'un autre bras 16, tenant le dispositif par la partie fixe 8. Le ressort 13 est dirigé vers le manchon 5, puis poussé sur lui par le bras 16. Les branches du ressort 13 sont alors écartées, et le ressort 13 s'enfonce et s'ajuste autour du manchon 5 en le serrant. Une portion plane 17 de la face inférieure 14, située dans la direction de visée de la caméra 6, s'appuie alors sur la face supérieure de la pince 2, en fournissant une orientation de référence du dispositif 15 sur la pince 2. Le dispositif peut être extrait par un mouvement opposé.

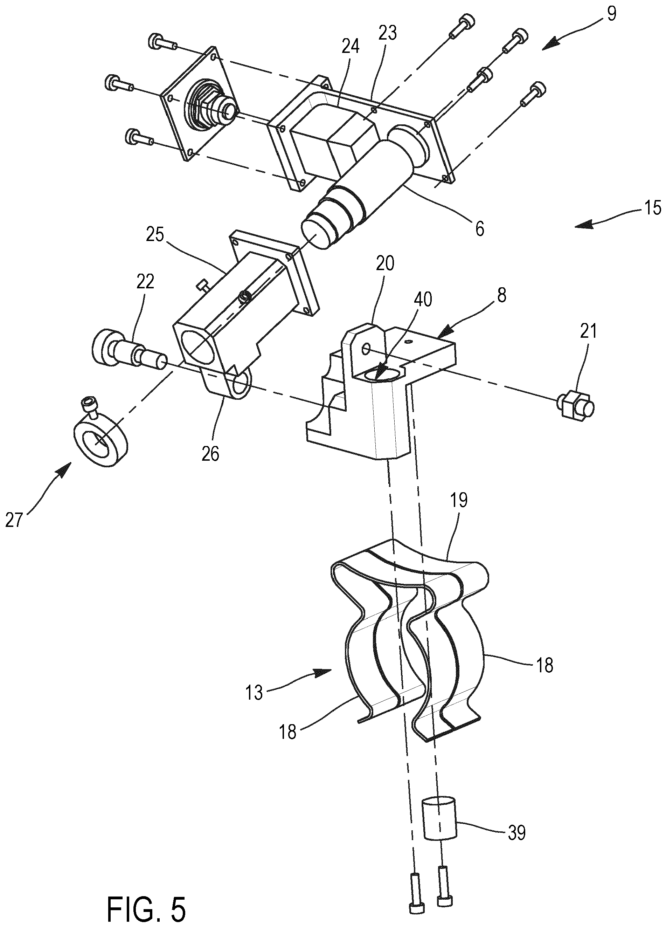

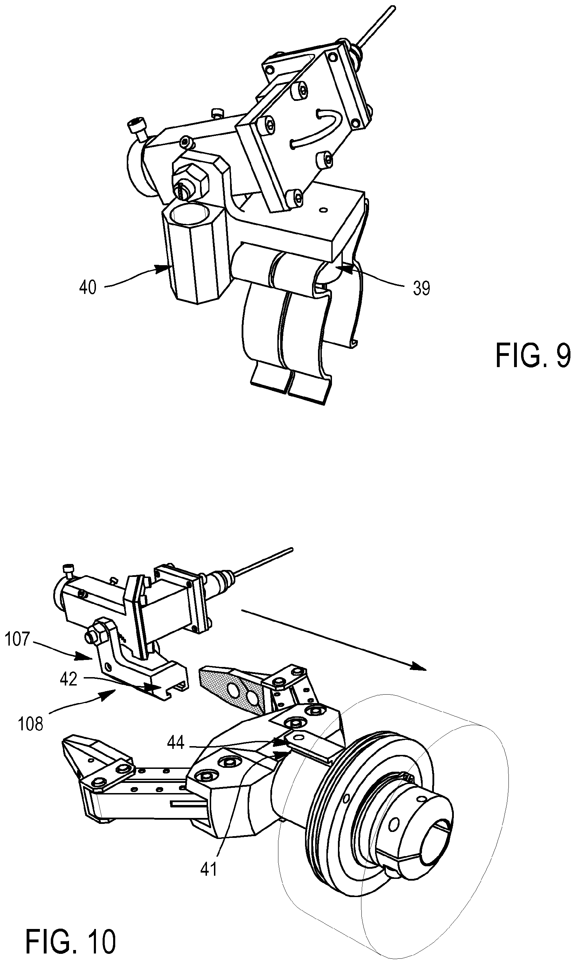

La figure 5 illustre le dispositif 15 en détail. Le ressort 13 comprend deux branches 18 arquées, leurs concavités étant orientées l'une vers l'autre, et unies entre elles par une jonction 19, vissée à la partie fixe 8. Toutefois, les extrémités libres des branches 18 ont des portions divergentes 38 et inclinées en formant un angle, de façon à ouvrir les branches 18 quand le ressort 13 est appuyé sur le raccord 5. La partie fixe 8 comporte encore un flasque 20 traversée par une vis à bille 21, et un logement d'un axe 22. La vis à bille 21 et l'axe 22 constituent les pièces maîtresses du frein 11 et de l'articulation 10. La partie fixe 8 comprend encore (figure 9) une entretoise 39 située entre les branches 18 du ressort 13 et permettant de maintenir en tension le ressort 13 lorsque le système est monté sur le poignet 4, en forçant un appui des extrémités des branches 13 sur le poignet 4, et une ouverture de celles-ci par rapport à leur état de repos. La partie fixe 8 peut être munie d'un usinage cylindrique 40 permettant de loger une tige non représentée, pour y laisser le dispositif 15 quand il est au repos.

La partie mobile 9 comprend un bâti mobile 25, portant la caméra 6 et une plaque arrière 23 retenant la caméra 6. Cette dernière porte une plaque de connecteur sur laquelle est monté le connecteur 24 optique et électrique. Le bâti mobile 25 est muni d'une chape 26 inférieure, dans laquelle est engagé l'axe 22 de l'articulation 10. Quand le montage est réalisé, le bâti mobile 25 tourne donc par rapport à la partie fixe 8 en entraînant la caméra 6 et le reste de la partie mobile 9, mais son mouvement peut être arrêté par le vissage de la vis 21, dont la bille vient appuyer dans des encoches réalisées sur le côté du bâti mobile 25. Une molette de focalisation 27 dépasse du bâti mobile 25 à l'avant, et permet de régler la focalisation de la caméra 6.

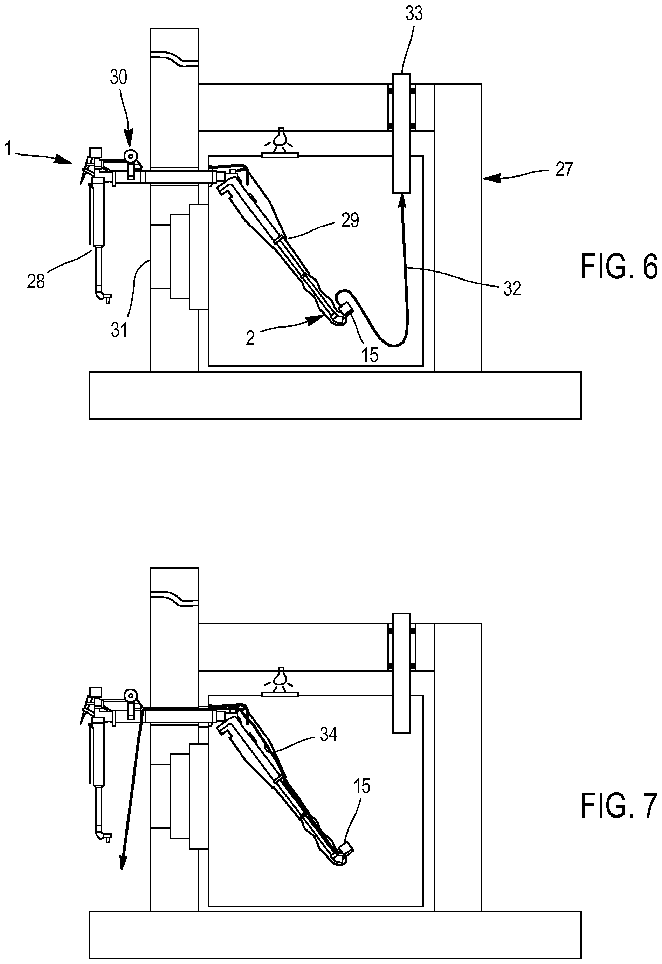

Une transmission entre la caméra 6 et l'extérieur du lieu de travail de la caméra 6 peut être assurée principalement de deux façons. Dans la réalisation de la figure 6, on a représenté complètement le bras 1 et la cellule 27 blindée dans laquelle il travaille, le bras 1 comprenant classiquement un bras maître 28 à l'extérieur de la cellule 27, un bras esclave 29 à l'intérieur, qui réplique les mouvements du bras maître 28, et une traversée 30 de la cellule 27, au-dessus d'un hublot d'observation 31. Le dispositif 15 peut être relié à l'extérieur par un fil 32, reliant le connecteur 24 à une canne électrique 33 d'un genre connu, traversant de façon étanche la paroi de la cellule 27. Le fil 32 peut être continu à travers la canne 33, ou uni à elle par un raccord non représenté.

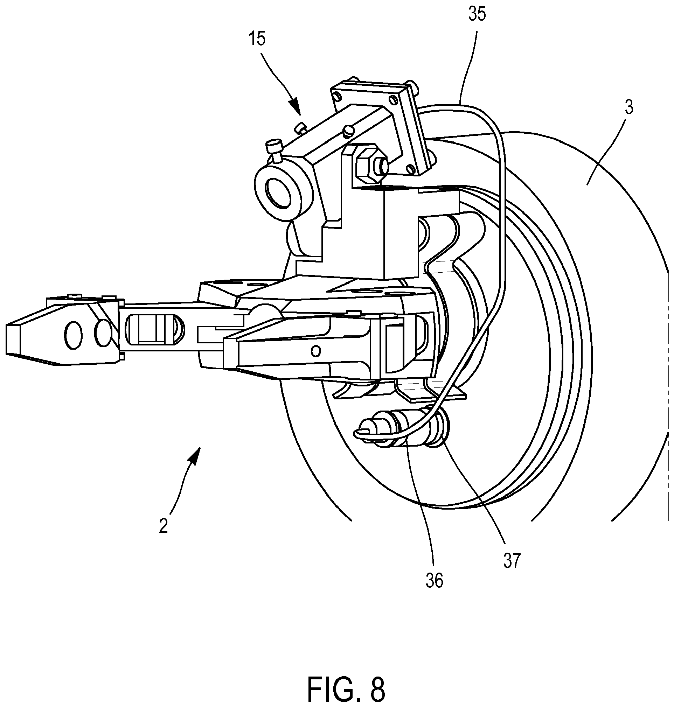

Dans la conception de la figure 7, le fil, alors 34, s'étend le long du bras 1, dans ses segments. Il est alors prévu (figure 8) de pourvoir le dispositif 15 d'une longueur de fil 35, finissant sur un connecteur 36 que le deuxième bras 16 peut enficher dans un connecteur complémentaire 37 établi sur le segment distal 3, une fois que le dispositif 15 a été mis en place.

L'invention pourra aussi être installée sur les télémanipulateurs neufs, qui viendront soit en remplacement de ceux qui sont en production (lorsqu'ils sont cassés), soit équiper de nouvelles cellules. Tout en utilisant toujours le principe d'emboîtement freiné, l'invention pourra alors être fixée au raccord tournant grâce à des formes réalisées directement sur le poignet de la pince (raccord étanche).

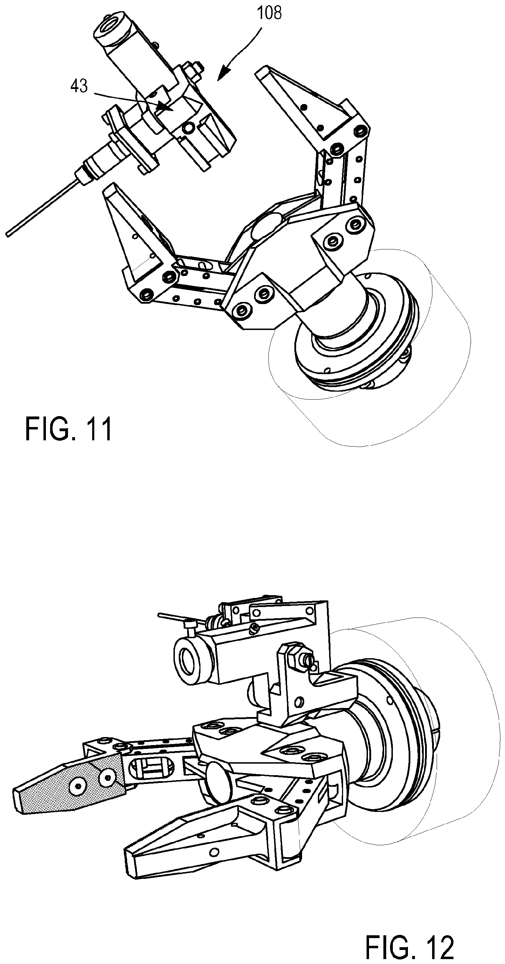

D'autres dispositifs seront maintenant décrits brièvement, afin d'expliciter le concept d'emboîtement freiné entre le dispositif et le bras de télémanipulateur 1, sur lequel il est monté. Dans le mode de réalisation des figures 10 à 12, le support porte la référence 107 et comporte, comme précédemment, une partie fixe et une partie mobile. La partie mobile est analogue à celle de la réalisation précédente, mais la partie fixe, maintenant 108, se distingue de la précédente comme suit. Le ressort 13 est supprimé, et remplacé par une rainure 42 en forme de T femelle, c'est-à-dire qu'elle est plus large au fond, des deux côtés, qu'à l'ouverture. Elle comporte encore un poussoir à bille 43, au bout de la rainure 42. Le bras 1 comprend, soit sur la pince 2, soit sur le raccord étanche 5, une rainure 41 mâle, de forme complémentaire en T et une encoche 44 au bout de la rainure. L'assemblage s'effectue par translation, en faisant coulisser les rainures 41 et 42 l'une dans l'autre, jusqu'à ce que la bille du poussoir 43 entre dans l'encoche ; le dispositif est alors retenu en place, tout en pouvant être retiré, dans effort important, quand on le désirera.

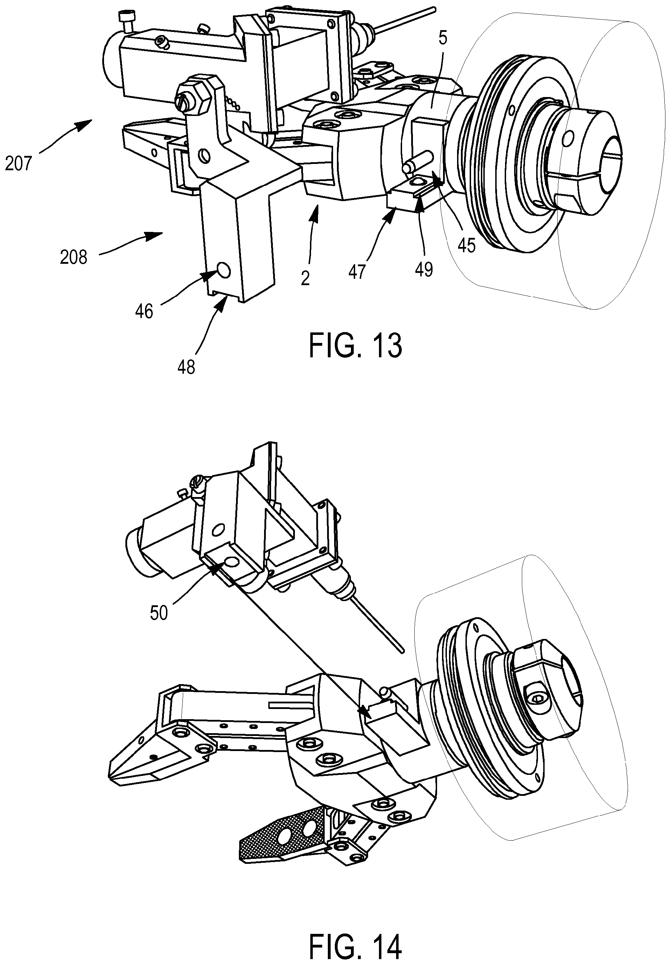

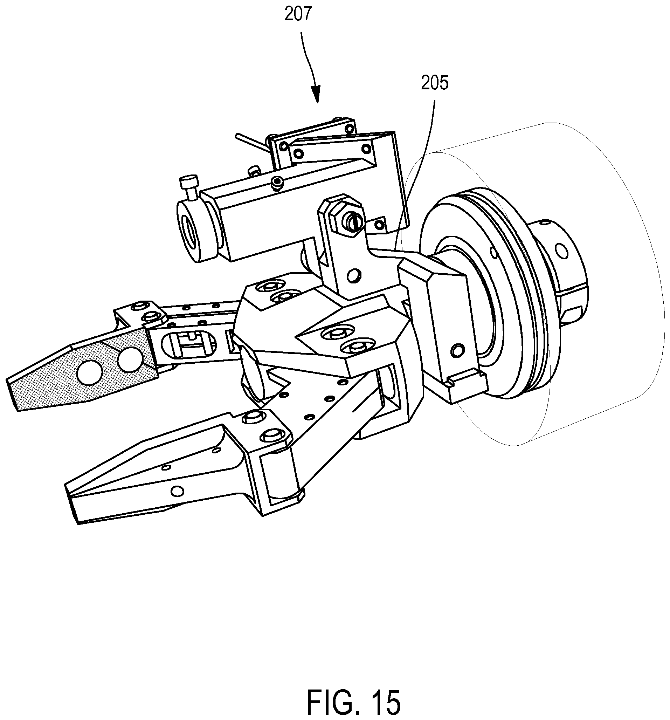

Un autre dispositif sera décrit en liaison aux figures 13, 14 et 15. Le dispositif 207 diffère ici encore par sa partie fixe 208. Elle comporte un orifice cylindrique 46, qu'on insère dans une tige cylindrique 45, érigée sur le raccord étanche 5, ou à défaut, la pince 2. L'arrêt en rotation de cette liaison est assuré par une patte 47 sur le raccord étanche 5 et par une rainure 48 sur la partie fixe 208. La patte 47 est disposée à côté de la tige 45 et s'étend parallèlement à elle, alors que la rainure 48 prolonge l'orifice 46. La patte 47 coulisse dans la rainure 48, dès que la tige 45 coulisse dans l'orifice 46. Le freinage est ici encore assuré par le poussoir à bille 49, établi ici sur la patte 47, et dont la bille se loge dans une encoche 50, au fond de la rainure 48, quand l'enfoncement est suffisant. Les propriétés de ce dispositif sont analogues à celles de la réalisation précédente.

Le dispositif pourrait encore comprendre d'autres capteurs que la caméra, et notamment un moyen d'éclairage, à diodes électroluminescentes par exemple, dirigée dans la même direction que la caméra, afin de lui éclairer la scène ; ou, entre autres possibilités, une sonde de radioactivité, mesurant l'activité environnante. De tels capteurs pourraient être montés de façon adjacente à la caméra, sur une portion libre de la plaque arrière 23.

La caméra pourrait être de n'importe quel modèle connu, en ce qui concerne des particules détectées (photons ou particules ionisantes, comme les particules α), le mode de détection (des caméras optiques ordinaires ou à transfert de charge pourraient ainsi être utilisées pour la détection des photons), ou le genre d'images captées (tridimensionnelles ou tridimensionnelles); plusieurs caméras pourraient ainsi être utilisées simultanément pour prendre des images tridimensionnelles, ou des scènes particulières, plus étendues, par exemple.

## Revendications

1. Dispositif de bras télémanipulateur et de caméra portative à monter sur le bras (1) télémanipulateur, comprenant une caméra (6) et un support de la caméra, le support et le bras comprenant des moyens complémentaires d'emboîtement et de frein répartis sur le support et le bras, soit un appui d'une face (17) du support opposée à la caméra sur une face du bras en fournissant une orientation de référence du dispositif, soit un usinage cylindrique et une tige logée dans ledit usinage,
**caractérisé en ce que** lesdits moyens complémentaires comprennent un ressort (13) de fixation en forme de pince et **en ce que** le ressort (13) comprend deux branches (18) arquées, ayant des concavités dirigées l'une vers l'autre, des extrémités libres (38) divergeant en formant un angle, et une entretoise (39) disposée entre les branches (18).

2. Dispositif selon la revendication 1, **caractérisé en ce qu'**il comprend un fil (32, 34, 35) de transmission entre la caméra (6) et un lieu extérieur à un lieu de travail de la caméra, et le fil comprend une longueur (35) solidaire du dispositif (15), une longueur (34) solidaire du bras télémanipulateur, et un raccord (36, 37) détachable entre les longueurs du fil.

3. Dispositif selon l'une quelconque des revendications 1 ou 2, **caractérisé en ce que** le support comprend une partie fixe (8, 108, 208) à laquelle appartiennent lesdits moyens complémentaires compris sur le support, et une partie mobile (9), reliée à la partie fixe par une articulation (10) et un frein (11), à laquelle est fixée la caméra (6).

4. Dispositif selon la revendication 3, **caractérisé en ce que** les moyens de frein comprennent une vis à bille (21).

5. Dispositif selon l'une quelconque des revendications 1 à 4, **caractérisé en ce qu'**il comprend, monté sur le support de façon adjacente à la caméra, un moyen d'éclairage dirigé dans une même direction que la caméra.

6. Dispositif selon l'une quelconque des revendications 1 à 5, **caractérisé en ce qu'**il comprend, monté sur le support de façon adjacente à la caméra, une sonde de radioactivité.

7. Dispositif selon l'une quelconque des revendications 1 à 6, **caractérisé en ce que** la caméra est choisie parmi des caméras optiques, à transfert de charge, détection de particules ionisantes, produisant des images bidimensionnelles ou tridimensionnelles.

## Patentansprüche

1. Vorrichtung mit einem Telemanipulatorarm und einer tragbaren Kamera zur Montage an dem Telemanipulatorarm (1), umfassend eine Kamera (6) und einen Träger für die Kamera, wobei der Träger und der Arm zusätzliche Füge- und Bremsmittel umfassen, die an dem Träger und dem Arm verteilt sind, entweder einen Anschlag einer Fläche (17) des Trägers entgegengesetzt zu der Kamera an einer Fläche des Arms, wodurch eine Referenzorientierung der Vorrichtung geliefert wird, oder eine zylindrische Bearbeitung und eine Stange, die in der Bearbeitung aufgenommen ist, **dadurch gekennzeichnet, dass** die zusätzlichen Mittel eine zangenförmige Befestigungsfeder (13) umfassen, und dass die Feder (13) zwei gebogene Arme (18) umfasst, die zueinander gerichtete Aushöhlungen haben, freie Enden (38), die unter Bildung eines Winkels divergieren, sowie einen Abstandshalter (39), der zwischen den Armen (18) angeordnet ist.

2. Vorrichtung nach Anspruch 1, **dadurch gekennzeichnet, dass** sie einen Draht (32, 34, 35) zur Übertragung zwischen der Kamera (6) und einem Ort außerhalb eines Arbeitsorts der Kamera umfasst, und der Draht eine Länge (35) umfasst, die mit der Vorrichtung (15) verbunden ist, eine Länge (34), die mit dem Telemanipulatorarm verbunden ist, sowie einen Anschluss (36, 37), der lösbar zwischen den Längen des Drahts ist.

3. Vorrichtung nach einem der Ansprüche 1 oder 2, **dadurch gekennzeichnet, dass** der Träger einen festen Teil (8, 108, 208) umfasst, zu dem die zusätzlichen Mittel gehören, die an dem Träger umfasst sind, sowie einen beweglichen Teil (9), der mittels eines Gelenks (10) und einer Bremse (11) an dem festen Teil verbunden ist, an dem die Kamera (6) befestigt ist.

4. Vorrichtung nach Anspruch 3, **dadurch gekennzeichnet, dass** die Bremsmittel eine Kugelschraube (21) umfassen.

5. Vorrichtung nach einem der Ansprüche 1 bis 4, **dadurch gekennzeichnet, dass** sie ein Beleuchtungsmittel umfasst, das an dem Träger in einer Weise benachbart zu der Kamera montiert ist und in ein und dieselbe Richtung orientiert ist wie die Kamera.

6. Vorrichtung nach einem der Anspruche 1 bis 5, **dadurch gekennzeichnet, dass** sie eine Radioaktivitätssonde umfasst, die an dem Träger in einer Weise benachbart zu der Kamera montiert ist.

7. Vorrichtung nach einem der Ansprüche 1 bis 6, **dadurch gekennzeichnet, dass** die Kamera ausgewählt ist aus den optischen Kameras, mit Ladungstransfer, mit Detektion von ionisierenden Partikeln, die zweidimensionale oder dreidimensionale Bilder produzieren.

## Claims

1. Device comprising a remote manipulator arm and a portable camera to be mounted on the remote-manipulator arm (1), comprising a camera (6) and a support for the camera, the support and the arm comprising complementary means for fitting together and braking, distributed on the support and the arm, either an abutment of a face (17) of the support opposite to the camera on a face of the arm, providing a reference orientation of the device, or a cylindrical machining and a rod housed in said machining, **characterised in that** said complementary means comprise a fixing spring (13) in the form of a gripper, and, **in that** the spring (13) comprises two curved branches (18), having concavities directed towards each other, free ends (38) diverging while forming an angle, and a strut (39) disposed between the branches (18).

2. D evice according to claim 1, **characterised in that** it comprises a wire (32, 34, 35) for transmission between the camera (6) and a place external to a place of work of the camera, and the wire comprises a length (35) secured to the device (15), a length (34) secured to the remote-manipulator arm, and a detachable coupling (36, 37) between the lengths of the wire.

3. Portable camera device according to any of claims 1 or 2, **characterised in that** the support comprises a fixed part (8, 108, 208) to which said complementary means included on the support belong, and a movable part (9), connected to the fixed part by an articulation (10) and a brake (11), to which the camera (6) is fixed.

4. Portable camera device according to claim 3, **characterised in that** the brake means comprise a ball screw (21).

5. Portable camera device according to any of claims 1 to 4, **characterised in that** it comprises, mounted on the support adjacent to the camera, a lighting means directed in the same direction as the camera.

6. Portable camera device according to any of claims 1 to 5, **characterised in that** it comprises, mounted on the support adjacent to the camera, a radioactivity sensor.

7. Portable camera device according to any of claims 1 to 6, **characterised in that** the camera is chosen from optical cameras, charge-transfer cameras or ionising particle detection cameras, producing two-dimensional or three-dimensional images.
